# EUROPÄISCHE PATENTSCHRIFT

(11) **EP 1 278 443 B1**
(45) Veröffentlichungstag und Bekanntmachung des Hinweises auf die Patenterteilung: **02.06.2004**
(21) Anmeldenummer: 01915353.5
(22) Anmeldetag: 15.03.2001
(51) Int. Cl.: A47J 27/21

(54) **WASSERKOCHER MIT EINSTELLBARER WASSERTEMPERATUR**
KETTLE WITH ADJUSTABLE WATER TEMPERATURE
BOUILLOIRE A TEMPERATURE D'EAU REGLABLE

(30) Priorität: 18.04.2000 DE 10019238
(43) Veröffentlichungstag der Anmeldung: 29.01.2003
(73) Patentinhaber: BSH Bosch und Siemens Hausgeräte GmbH, 81739 München (DE)
(72) Erfinder: OBERMAIER, Markus, 83365 Nussdorf (DE); MAGG, Johannes, 83368 St. Georgen (DE); KRAMER, Siegmund, 83417 Kirchanschöring (DE); STURM, Robert, 83352 Altenmarkt (DE)
(86) Internationale Anmeldenummer: PCT/EP2001/002958
(87) Internationale Veröffentlichungsnummer: WO 2001/078566

(56) Entgegenhaltungen:
- WO-A-95/34187
- WO-A-98/30066
- DE-A- 19 652 829

## Beschreibung

Die Erfindung betrifft einen Wasserkocher mit einem Behälter nach dem Oberbegriff des unabhängigen Anspruchs 1. Solcher Wasserkocher ist aus WO-A-95/34187 bekannt.

Bei den aus der Praxis bekannten Wasserkochern, insbesondere bei kleinen Geräten, bei denen der Durchmesser des Heizbodens und damit der darauf angeordneten Diffusorplatte sehr klein ist bleibt wenig Platz zum Anbringen des Trockengehschutzeinheit der Mittenkontakteinheit und des temperaturleitenden Verbindungselementes vom Temperaturregler zur Diffusorplatte im Innenkreis der Diffusorplatte, der durch den Rohrheizkörper festgelegt ist Bei den bekannten Wasserkochern mit Mittenkontakteinheit ist diese Mittenkontakteinheit deshalb im allgemeinen gegenüber der Diffusorplatte versetzt im Bodengehause angeordnet Hierzu ist am Bodengehäuse im allgemeinen ein zusätzlicher Einsatz vorgesehen. auf dem diese Mittenkontakteinheit befestigt ist. Dies verteuert jedoch sowohl Fertigung als auch Montage, da der üblicherweise aus Kunststoff gefertigte Gehauseboden eine aufwendige Gießform erhält und außerdem die Bauteile Trockengehschutz. Temperaturregler mit temperaturleitender Verbindung zum Diffusorboden und Mittenkontakteinheit in getrennten Montageschritten befestigt werden müssen. Es sind weiterhin zwar auch bereits Wasserkocher mit einer Mittenkontakteinheit bekannt. bei der der Trockengehschutz in die Mittenkontakteinheit integriert ist. Der Einsatz einer solcher Mittenkontakteinheit mit integrierten Trockengehschutz, die direkt auf die Diffusorplatte aufgeschraubt ist, führt jedoch dazu, daßnur ein sehr kleiner Abschnitt auf der Diffusorplatte zum Anbringen der temperaturleitenden Verbindung zum Temperaturregler verbleibt. Hierdurch wird die Temperaturanbindung des Temperaturreglers an die Diffusorplatte und damit sein Regelverhalten beeinträchtigt.

Die Aufgabe der vorliegenden Erfindung besteht darin, einen gattungsgemäßen Wasserkocher so weiterzubilden, daßauch bei sehr reduzierten Platzverhältnissen auf dem Heizboden des Behälters eine genaue Temperaturregelung möglich ist und gleichzeitig eine einfache Herstellung und Montage gewährleistet bleibt.

Diese Aufgabe wird bei einem Wasserkocher der eingangs genannten Art erfindungsgemäß dadurch gelöst, dass die Mittenkontakteinheit eine gewölbte Bodenplatte aufweist, die mittig auf der Diffusorplatte angeordnet und in die die Trockengehschutzeinheit integriert ist, wobei das temperaturleitende Verbindungselement des Temperaturreglers mit der Diffusorplatte eine Kontaktfläche zur Diffusorplatte aufweist, die unter die Bodenplatte der Mittenkontakteinheit greift.

Durch diese Ausgestaltung wird eine zuverlässige Temperaturanbindung des Temperaturreglers an den Diffusorboden und damit eine relativ genaue Temperatureinstellung möglich Darüber hinaus sind die Mittenkontakteinheit und der Trockengehschutz auf einer gemeinsamen Bodenplatte integriert, wodurch sich eine vereinfachte Montage erreichen läßt.

Gemäß einer bevorzugten Ausführungsform weist das temperaturleitende Verbindungselement des Temperaturreglers zur Diffusorplatte einen Abschnitt auf, der auf der Bodenplatte der Mittenkontakteinheit aufliegt und diese auf der Diffusorplatte festhält. Hierdurch wird die Montage weiter vereinfacht, da die Anzahl der Befestigungselemente zum Festhalten von Mittenkontakteinheit, Trockengehschutz und Temperaturregler vermindert wird.
Gemäß einer weiteren bevorzugten Ausführungsform ist die Kontaktfläche des temperaturleitenden Verbindungselements im wesentlichen T-förmig mit zwei seitlich angeordneten abgewinkelten Abschnitten ausgebildet, die die Bodenplatte der Mittenkontakteinheit umgreifen, um diese auf der Diffusorplatte festzuhalten. Diese Ausgestaltung ermöglicht ein zuverlässiges Festhalten der Bodenplatte mit der Mittenkontakteinheit auf der Diffusorplatte.

Gemäß einer weiteren bevorzugten Ausführungsform weist die Mittenkontakteinheit einen Arm auf, auf dem ein Dampfsensor zum Ausschalten des Wasserkochers angeordnet ist, der über einen Dampfkanal mit dem Inneren des Behälters verbunden ist. Durch diese Ausgestaltung wird eine zusätzliche Kochstoppsicherung erreicht, die platzsparend im Bodengehäuse angeordnet ist und darüber hinaus durch einstückige Ausbildung mit dem Mittenkontakt einfach montiert werden kann.

Nachfolgend wird anhand schematischer Figuren ein Ausführungsbeispiel des erfindungsgemäßen Wasserkochers beschrieben. Es zeigen:
- Fig. 1: eine starkschematische Schnittdarstellung in Seitenansicht des Wasserkochers;
- Fig. 2: eine Aufsicht auf den Boden des Behälters im Wasserkocher entlang der I-I Linie und
- Fig. 3: eine perspektivische Darstellung des Bügels zur Anbindung des Temperaturreglers an den Diffusorboden.

Ein Wasserkocher 1 weist einen Edelstahltopf 3 auf, in dessen Bodenbereich ein Bodengehäuse 5 aus dem temperaturbeständigen Kunststoff befestigt ist. An dieses Bodengehäuse 5 schließt sich ein über die Höhe der Wandung des Topfes 3 sich erstreckendes Griffteil 7 aus ebenfalls temperaturbeständigen Kunststoff an. Dem Griffteil 7 gegenüberliegend weist der Edelstahltopf 3 eine Schnaube 9 auf. Die obere Öffnung des Topfes 3 ist durch einen Deckel 11 verschließbar, der über ein Scharnier an dem Griffteil 7 befestigt ist. Der Edelstahltopf 3 bzw. das Griffteil 7 weisen im Bereich der Öffnung des Topfes 3 einen Einlass für einen Dampfkanal 13 auf, der sich entlang der Wandung des Edelstahltopfes im Griffteil 7 bis zum Bodengehäuse 5 erstreckt.

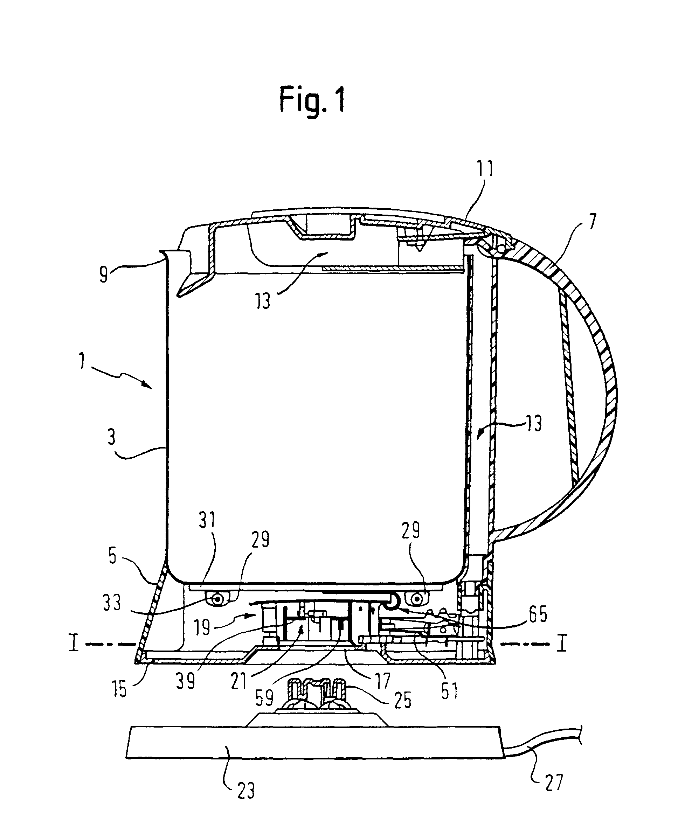

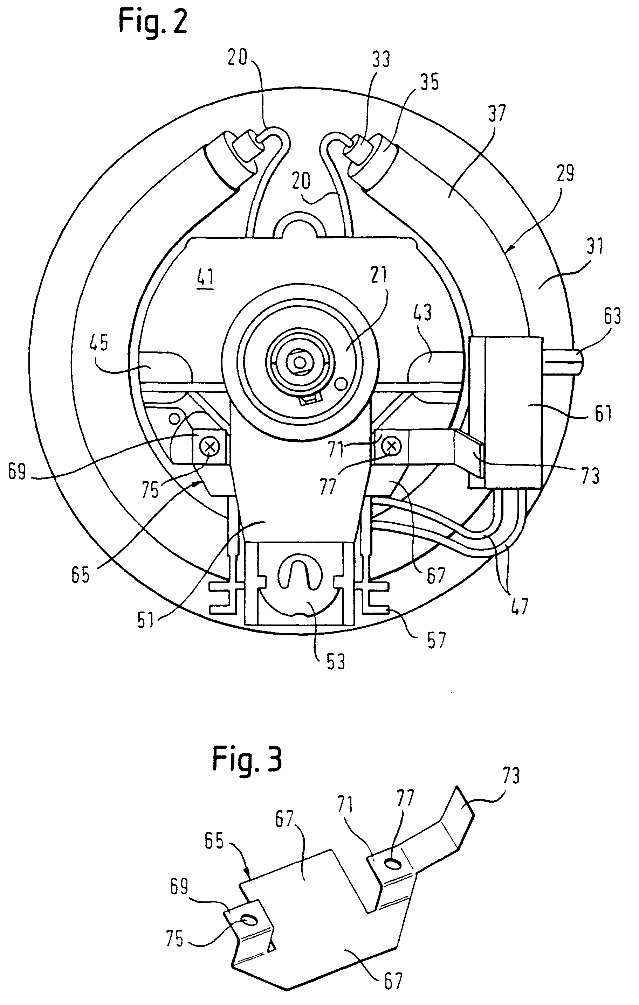

Das Bodengehäuse 5 weist eine Bodenplatte 15 auf, in der mittig eine Öffnung 17 vorgesehen ist. Durch diese Öffnung 17 in der Bodenplatte 15 des Wasserkochers 1 ist eine Mittenkontakteinheit 19 zugänglich, die eine Buchse 21 zur Stromabnahme aufweist (Fig. 1. Fig. 2). Der Wasserkocher 1 kann mit seiner Bodenplatte 15 auf einen Sockel 23 aufgesetzt werden, der eine zur Buchse 21 korrespondierende Steckereinheit 25 aufweist. Diese Steckereinheit 25 ist an ein Stromkabel 27 angeschlossen.

Die Buchse 21 der Mittenkontakteinheit 19 ist über ein Kabel 20 an einen Rohrheizkörper 29 angeschlossen, der auf einer Diffusorplatte 31 umlaufend angeordnet ist. Der Rohrheizkorper 29 weist einen Widerstandsheizdraht 33 auf, der von einer isolierenden Zwischenschicht 35 und einem Mantel 37 vorzugsweise aus Aluminium umgeben ist. Die Diffusorplatte 31 ist vorzugsweise auch aus Aluminium gefertigt, wobei der Mantel 37 des Rohrheizkörpers 29 mit der Diffusorplatte verlötet ist. Die Diffusorplatte 31 ist wiederum mit dem Boden des Edelstahltopfes 3 verlötet. Alternativ zu einem Edelstahltopf kann auch ein Kunststofftopf verwendet werden, in den ein beheizbarer Boden eingesetzt ist.

Die Buchse 21 der Mittenkontakteinheit 19 ist in einem aus temperaturbeständigen Kunststoff gefertigten Mittenkontaktgehäuse 39 eingesetzt, das wiederum auf einer Bodenplatte 41 befestigt ist. Diese Bodenplatte 41 ist im wesentlichen kreisförmig ausgebildet, wobei die Bodenplatte 41 auf zwei sich gegenüberliegenden Seiten abgeplattet ist. Die Bodenplatte ist weiterhin zum Mittenkontaktgehäuse gewölbt ausgeformt, so daß die Bodenplatte nur in ihrem nicht abgeplatteten Randbereich auf der Diffusorplatte 31 aufliegt.

In diesem Randbereich sind jeweils zwei sich gegenüberliegende Trockengehsicherungen 43. 45 angeordnet. Diese an sich bekannten Trockengehsicherungen 43, 45 weisen jeweils eine Bimetall-Sprungscheibe auf, die sich im Kontakt mit der Diffusorplatte 31 befinden und mit einem Unterbrecherelement (nicht gezeigt) verbunden sind, daß in die elektrische Verbindung zwischen der Buchse 21 und dem Widerstandsheizdraht 33 geschaltet ist. Die Sprungscheiben der Trockengehschutzeinheiten 43, 45 sind dabei so ausgelegt, daß die Sprungscheiben die Unterbrecherkontakte betätigen wenn eine Temperatur auf der Diffusorplatte erreicht ist, die anzeigt, daß der Edelstahltopf 3 ohne Wasser geheizt wird. Wenn sich dann der Edelstahltopf wieder abkühlt, kehren die Sprungscheiben in ihre Ausgangsposition zurück, wobei sich die Unterbrecherkontakte wieder schließen, so daß der Widerstandsheizdraht 33 im Rohrheizkörper 29 wieder mit Strom versorgt wird. Der Einsatz von zwei Trockengehschutzeinheiten sorgt dabei für eine erhöhte Sicherheit. Die Integration der beiden Trockengehschutzelemente 43, 45 in die Bodenplatte 41 ermöglicht eine vereinfachte Fertigung des Wasserkochers 1, da die Trokkengehschutzelemente 43, 45 auf der Bodenplatte 41 vormontiert und dann nur die Kontakteinheit im Bodengehäuse 5 eingesetzt werden muss.

Am Mittenkontaktgehäuse 39 ist weiterhin ein Arm 51 angeformt, auf dem ein Dampfsensor 53 sitzt. Dieser Dampfsensor 53 weist eine Bimetall-Sprungscheibe auf, die unterhalb des Dampfkanals 13 angeordnet ist. Weiterhin ist der Dampfsensor mit einem Unterbrecherkontakt gekoppelt, der in die elektrische Verbindung zwischen der Buchse 21 der Mittenkontakteinheit 19 und dem Widerstandsheizdraht 33 im Rohrheizkörper 29 geschaltet ist. Wenn beim Kochen des Wasser im Edelstahltopf 3 Dampf entsteht, steigt dieser nach oben und wird über den Dampfkanal 13 auf die Bimetall-Sprungscheibe des Dampfsensors 53 geleitet. Die Bimetall-Sprungscheibe ist dabei so ausgelegt, daß sie bei der Wasserdampftemperatur den Unterbrecherkontakt öffnet und damit die Stromversorgung des Rohrheizkörpers 29 unterbricht.

Gleichzeitig mit dem Schalten des Unterbrecherkontakts durch die Bimetall-Sprungscheibe wird auch ein Schalthebel 57 betätigt, der mit dem Ein/Ausschalter (nicht gezeigt) des Wasserkochers verbunden ist. Der Schalthebel 57 wird weiterhin auch von einem in der Buchse 21 der Mittenkontakteinheit 19 angeordneten Knopf 59 betätigt, wobei der Knopf 59 den Schalthebel 57 dann, wenn die Steckereinheit 25 nicht in die Buchse 21 der Mittenkontakteinheit 19 eingreift und somit der Wasserkocher 1 nicht auf dem Sockel 23 aufsitzt, in die AUS-Stellung bnngt. Diese sog. Lift-Switch-Off-Technik dient als zusätzliches Sicherheitselement und schaltet den Wasserkocher automatisch beim Abheben vom Sokkel 23 ab.
Im Bodengehäuse 5 ist weiterhin seitlich ein Temperaturregler 61 angeordnet, der über ein Kabel 47 in die elektrische Verbindung zwischen dem Widerstandsheizdraht 33 und der Buchse 21 geschaltet ist und ein Bimetallelement enthält, das über einen Drehknopf 63 vorgespannt werden kann. Das Bimetallelement im Temperaturregler 61 ist über einen Bügel 65 mit der Diffusorplatte 31 verbunden, der aus einem temperaturleitenden Material, vorzugsweise Aluminium, gefertigt ist. Durch den Bügel 65 wird die Temperatur der Diffusorplatte 31 auf das Bimetallelement im Temperaturregler 61 übertragen, wobei das Bimetallelement abhängig von der über den Bügel 65 angelegten Temperatur und der Vorspannung die elektrische Verbindung zwischen der Mittenkontakteinheit 19 und dem Widerstandsheizdraht 33 unterbricht. Die Vorspannung des Bimetallelements im Temperaturregler 61 hängt dabei von der Stellung des Drehknopfes 63 ab, so daß durch ein Verdrehen des Drehknopfes 63 eine Temperaturregelung vorgenommen werden kann. Für diese Temperaturregelung ist es jedoch entscheidend, daß eine gute Ankopplung des Bimetallelements im Temperaturregler 61 an die Temperatur auf der Diffusorplatte 31 erfolgt.

Wie Fig. 3 zeigt, ist der Bügel 65, der den Temperaturregler 61 mit der Diffusorplatte 31 verbindet, mit einer im wesentlichen T-förmigen Kontaktfläche 67 und zwei nach oben abstehende seitlich angeordnete Abkantungen 69, 71 versehen, wobei sich an eine der seitlichen Abkantungen 71 ein L-förmiges Winkelelement 73 anschließt, das fest mit dem Temperaturregler verbunden ist. Der Bügel 65 ist so auf der Diffusorplatte 31 angeordnet, daß die T-förmige Kontaktflache 67, die auf der Diffusorplatte 31 aufliegt, sich in die Wölbung der Bodenplatte 41 unter das Mittenkontaktgehäuse 39 erstreckt. Die seitlichen Abkantungen 69, 71 des Bügels 65 umgreifen dabei den Randbereich der Bodenplatte 41. In den seitlichen Abkantungen sind jeweils Bohrungen 75, 77 vorgesehen, die über entsprechenden Bohrungen im Randbereich der Bodenplatte 41 zu liegen kommen. In diesen Bohrungen 75, 77 können dann Nieten oder Schrauben eingesetzt werden, die sowohl den Bügel 65 als auch die Bodenplatte 41 auf der Diffusorplatte 31 festhalten. Um für einen guten Wärmeübergang zwischen der Diffusorplatte 312 und der T-förmigen Kontaktfläche des Bügels 65 zu sorgen und zugleich Toleranzen auszugleichen, ist eine Warmeleitpaste oder Warmefolie zwischen der T-förmigen Kontaktfläche 67 des Bügels 65 und der Diffusorplatte 31 eingebracht.

## Patentansprüche

1. Wasserkocher mit einem Behälter (3), der ein Bodengehäuse (5) mit einer elektrischen Heizeinrichtung aufweist, und einem Sockel (23), der ein Stromkabel (27) zum Anschluss an ein Stromnetz aufweist, wobei die elektrische Heizeinrichtung eine Diffusorplatte (31), die mit einem Boden des Behälters (3) verbunden ist, einen Rohrheizkörper (29), der umlaufend auf der Diffusorplatte angeordnet ist, eine auf dem Bodengehäuse angeordnete Mittenkontakteinheit (19), die mit dem Rohrheizkörper verbunden ist, um diesen mit Strom zu versorgen, eine Trockengehschutzeinheit (43, 45), die auf der Diffusorplatte (31) angeordnet ist und zwischen die Mittenkontakteinheit (19) und den Rohrheizkörper (29) geschaltet ist, um den Rohrheizkörper abzuschalten, wenn sich keine Flüssigkeit im Behälter befindet, und einen Temperaturregler (61), der seitlich am Bodengehäuse (5) angeordnet und zwischen die Mittenkontakteinheit (19) und den Rohrheizkörper (29) geschaltet ist, wobei im Sockel (23) eine zur Mittenkontakteinheit (19) korrespondierende Steckereinheit (25) vorgesehen ist, und wobei die Mittenkontakteinheit (19) eine gewölbte Bodenplatte (41) aufweist, die mittig auf der Diffusorplatte (31) angeordnet ist und in die die Trockengehschutzeinheit (43, 45) integriert ist **dadurch gekennzeichnet, daß** der Temperaturregler (61) über ein temperaturleitendes Verbindungselement (65) mit der Diffusorplatte (31) verbunden ist, um eine Temperatur der Flüssigkeit im Behälter (3) einzustellen, wobei das temperaturleitende Verbindungselement (65) des Temperaturreglers (61) zur Diffusorplatte (31) eine Kontaktfläche (67) mit der Diffusorplatte aufweist, die unter die Bodenplatte (41) der Mittenkontakteinheit greift.

2. Wasserkocher gemäß Anspruch 1, **dadurch gekennzeichnet, daß** das temperaturleitende Verbindungselement (65) des Temperaturreglers (61) zur Diffusorplatte (31) einen Abschnitt (69, 71) aufweist, der auf der Bodenplatte (41) der Mittenkontakteinheit (19) aufliegt und diese auf der Diffusorplatte (31) festhält.

3. Wasserkocher gemäß Anspruch 1 oder 2, **dadurch gekennzeichnet, daß** die Kontaktfläche (67) des temperaturleitenden Verbindungselements (65) im wesentlichen T-förmig mit zwei seitlich angeordneten abgewinkelten Abschnitten (69, 71) ausgebildet ist, die die Bodenplatte (41) der Mittenkontakteinheit (19) umgreifen, um diese auf der Diffusorplatte (31) festzuhalten.

4. Wasserkocher gemäß Anspruch 3, **dadurch gekennzeichnet, daß** in den zwei seitlich angeordneten abgewinkelten Abschnitten (69, 71) des temperaturleitenden Verbindungselements (65) Bohrungen (75, 77) eingebracht sind, die über entsprechenden Bohrungen in der Bodenplatte (41) zu liegen kommen, wobei in diesen Bohrungen Befestigungselemente angeordnet werden können.

5. Wasserkocher gemäß einem der Ansprüche 1 bis 4, **dadurch gekennzeichnet, daß** die Mittenkontakteinheit (19) einen Arm (51) aufweist, auf dem ein Dampfsensor (53) angeordnet ist, der über einen Dampfkanal (19) mit dem Behälter (3) verbunden ist, um die Stromversorgung zwischen Mittenkontakteinheit (19) der Rohrkörperheizung (29) bei Entstehen von Wasserdampf im Behälter (3) zu unterbrechen.

6. Wasserkocher gemaß einem der Ansprüche 1 bis 5, **dadurch gekennzeichnet, daß** ein Schalthebel (57) an der Mittenkontakteinheit (19) angeformt ist, der von der Mittenkontakteinheit (19) in den AUS-Zustand geschaltet wird, wenn die Mittenkontakteinheit (19) im Bodengehäuse (5) nicht in die Steckereinheit (25) im Sockel (23) eingreift.

## Claims

1. Kettle with a container (3), which comprises a base housing (5) with an electric heating device, and a pedestal (23) having a current lead (27) for connection to a current mains, wherein the electric heating device comprises a diffuser plate connected with a base of the container (3), a tubular heating body arranged to extend around on the diffuser plate, a centre contact unit (19) arranged on the base housing and connected with the tubular heating body in order to supply this with current, a dry-operation protection unit (43, 45) arranged on the diffuser plate (31) and connected between the centre contact unit (19) and the tubular heating body (29) in order to switch off the tubular heating body if no liquid is present in the container, and a temperature regulator (61) arranged laterally at the base housing (5) and connected between the centre contact unit (19) and the tubular heating body (29), wherein a plug unit (25) corresponding with the centre contact unit (19) is provided in the pedestal (23) and wherein the centre contact unit (19) has an arched base plate (41) which is arranged centrally on the diffuser plate (31) and in which the dry-operation protection unit (43, 45) is integrated, **characterised in that** the temperature regulator (61) is connected by way of a temperature-conductive connecting element (65) with the diffuser plate (31) in order to set a temperature of the liquid in the container (3), wherein the temperature-conductive connecting element (65) of the temperature regulator (61) to the diffuser plate (31) comprises a contact surface (67) with the diffuser plate, which surface engages under the base plate of the centre contact unit.

2. Kettle according to claim 1, **characterised in that** the temperature-conductive connecting element (65) of the temperature regulator (61) to the diffuser plate (31) has a portion (69, 71) which rests on the base plate (41) of the centre contact unit (19) and fixes this on the diffuser plate (31).

3. Kettle according to claim 1 or 2, **characterised in that** the contact surface of the temperature-conductive connecting element (65) is formed to be substantially T-shaped with two laterally arranged angled portions (69, 71) which engage around the base plate (41) of the centre contact unit (19) in order to fix this on the diffuser plate (31).

4. Kettle according to claim 3, **characterised in that** bores (75, 77) which come to lie above corresponding bores in the base plate (41) are formed in the two laterally arranged, angled portions (69, 71) of the temperature-conductive connecting element (65), wherein fastening elements can be arranged in these bores.

5. Kettle according to one of claims 1 to 4, **characterised in that** the centre contact unit (19) has an arm (51) on which a steam sensor (53) is arranged, which is connected by way of a steam channel (19) with the container (3) in order to interrupt the current supply between centre contact unit (19) and the tubular heating body (29) on occurrence of water steam in the container (3).

6. Kettle according to one of claims 1 to 5, **characterised in that** a switch lever (57) is formed at the centre contact unit (19) and is switched by the centre contact unit (19) onto the OFF state when the centre contact unit (19) in the base housing (5) is not engaged in the plug unit (25) in the pedestal (23).

## Revendications

1. Bouilloire munie d'un réservoir (3) présentant un boîtier de fond (5) doté d'une unité de chauffage électrique, et d'un socle (23) présentant un câble électrique (27) pour le raccordement à un réseau de courant, l'unité de chauffage électrique présentant une plaque de diffuseur (31) qui est raccordée à un fond du réservoir (3), un radiateur tubulaire (29) qui est placé de manière circulaire sur la plaque de diffuseur, une unité de contact central (19) placée sur le boîtier de fond, qui est raccordée au radiateur tubulaire pour alimenter celui-ci en courant, une unité de protection contre la marche à sec (43, 45) qui est placée sur la plaque de diffuseur (31) et est commutée entre l'unité de contact central (19) et le radiateur tubulaire (29) pour mettre le radiateur tubulaire hors service lorsqu'il n'y a pas de liquide dans le réservoir, et un régulateur de température (61) qui est placé latéralement sur le boîtier de fond (5) et est commuté entre l'unité de contact central (19) et le radiateur tubulaire (29), une unité à fiches (25) correspondant à l'unité de contact central (19) étant prévue dans le socle (23), et l'unité de contact central (19) présentant une plaque de fond (41) bombée qui est placée de manière centrale sur la plaque de diffuseur (31) et est intégrée dans l'unité de protection contre la marche à sec (43, 45), **caractérisée en ce que** le régulateur de température (61) est raccordé à la plaque de diffuseur (31) par l'intermédiaire d'un élément de liaison (65) conducteur de température afin de régler une température du liquide dans le réservoir (3), l'élément de liaison (65) conducteur de température du régulateur de température (61) pour la plaque de diffuseur (31) présentant, avec la plaque de diffuseur, une surface de contact (67) qui a prise en dessous de la plaque de fond (41) de l'unité de contact central.

2. Bouilloire selon la revendication 1, **caractérisée en ce que** l'élément de liaison (65), conducteur de température, du régulateur de température (61) pour la plaque de diffuseur (31) présente une section (69, 71) qui s'appuie sur la plaque de fond (41) de l'unité de contact central (19) et maintient celle-ci sur la plaque de diffuseur (31).

3. Bouilloire selon la revendication 1 ou 2, **caractérisée en ce que** la surface de contact (67) de l'élément de liaison (65) conducteur de température est exécutée essentiellement en forme de T avec deux sections (69, 71) coudées, placées latéralement, qui entourent la plaque de fond (41) de l'unité de contact central (19) afin de maintenir celle-ci sur la plaque de diffuseur (31).

4. Bouilloire selon la revendication 3, **caractérisée en ce que** des trous (75, 77) sont insérés dans les deux sections (69, 71) coudées, placées latéralement, de l'élément de liaison (65) conducteur de température, ces trous arrivant au-dessus de trous correspondants dans la plaque de fond (41), des éléments de fixation pouvant être placés dans ces trous.

5. Bouilloire selon l'une quelconque des revendications 1 à 4, **caractérisée en ce que** l'unité de contact central (19) présente un bras (51), sur lequel est placé un capteur de vapeur (53) qui est raccordé au réservoir (3) par un canal de vapeur (19) afin d'interrompre l'alimentation en courant entre l'unité de contact central (19) du radiateur tubulaire (29) lorsque de la vapeur d'eau se produit dans le réservoir (3).

6. Bouilloire selon l'une quelconque des revendications 1 à 5, **caractérisée en ce qu'**un levier de commutation (57) est formé sur l'unité de contact central (19), qui est commuté en état d'ARRET par l'unité de contact central (19) lorsque l'unité de contact central (19) dans le boîtier de fond (5) n'a pas prise dans l'unité à fiches (5) du socle (23).
